**Europäisches Patentamt**

**European Patent Office**

**Office européen des brevets**

(19)

(11) Numéro de publication : **0 350 389 B1**

(12)

# FASCICULE DE BREVET EUROPEEN

(45) Date de publication du fascicule du brevet :
**02.09.92 Bulletin 92/36**

(51) Int. Cl.⁵ : **B23D 77/04**

(21) Numéro de dépôt : **89401909.0**

(22) Date de dépôt : **04.07.89**

(54) **Alésoir à lame rapportée.**

(30) Priorité : **08.07.88 FR 8809702**

(43) Date de publication de la demande :
**10.01.90 Bulletin 90/02**

(45) Mention de la délivrance du brevet :
**02.09.92 Bulletin 92/36**

(84) Etats contractants désignés :
**AT BE CH DE ES FR GB GR IT LI LU NL SE**

(56) Documents cités :
**DE-A- 3 316 053**
**FR-A- 2 347 142**

(73) Titulaire : **Planche, Simon**
**26, rue Marius Billard**
**F-38110 La Tour du Pin (FR)**
Titulaire : **Planche, Yves**
**14, Place Carnot**
**F-38110 La Tour du Pin (FR)**

(72) Inventeur : **Planche, Simon**
**26, rue Marius Billard**
**F-38110 La Tour du Pin (FR)**
Inventeur : **Planche, Yves**
**14, Place Carnot**
**F-38110 La Tour du Pin (FR)**

(74) Mandataire : **Ecrepont, Robert**
**Cabinet Ecrepont 12 Place Simon Vollant**
**F-59800 Lille (FR)**

EP 0 350 389 B1

Jouve, 18, rue Saint-Denis, 75001 PARIS

## Description

L'invention se rapporte à un alésoir à lame rapportée.

A ce jour, on connaît de nombreux types d'outils à lame rapportée que ce soit pour le tournage (CH-A-488.513, FR-A-2.302.806 et FR-A-1.158.194), pour le perçage (FR-A-2.298.393), pour le fraisage (FR-A-2.589.765) ou pour l'alésage (FR-A-2.347.142, 2.209.630, 2.005.928 et DE-A-3.316.053).

Pour le tournage comme pour le percage, la lame attaque le métal par son extrémité ou près de celle-ci alors que, pour l'alésage c'est sensiblement par toute la longueur de son arête tranchante que la lame attaque le métal.

Les conditions de travail sont donc très différentes. De plus, pour le tournage comme pour le fraisage ou pour le perçage, la position de la lame par rapport au corps de l'outil n'a pas une importance primordiale pour garantir le respect de la côte à obtenir puisque la profondeur du travail sera déterminée à compter du contact entre l'outil et le métal à travailler.

Dans le cas de l'alésage, au contraire, seule la position de l'arête tranchante par rapport à l'axe longitudinal du corps de l'outil détermine la côte à obtenir.

C'est pourquoi dans les alésoirs à lame rapportée, lesquels comportent une tige pourvue d'une tête présentant une rainure, sensiblement parallèle à l'axe destinée à recevoir la lame par exemple en carbure, sont nécessaires :

– non seulement des moyens de fixation de cette lame dans la position requise,

– mais encore des moyens réglant avec une grande précision la position de la dite lame dans la rainure et ce faisant la position de son arête coupante par rapport à l'axe de la tête, alors que, dans les autres outils, des moyens de calage et de fixation suffisent.

Dans l'un des alésoirs connus à ce jour (FR-A-2.209.630) les moyens de réglage consistent en au mons une vis de pression appuyant directement sur le bord arrière de la lame, lequel est légèrement incliné.

Avec ces moyens de réglage, au cours de la rotation de la vis, l'extrémité de cette vis trouve une assise différente sur le bord de la lame et il en résulte une irrégularité dans le réglage.

Dans un autre de ces alésoirs connus (FR-A-2.005.928 et 2.347.142), afin de tenter d'y remédier, entre l'arrière de la lame et l'extrémité de la vis est interposé un poussoir constitué d'un corps cylindrique libre en translation dans un alésage prolongeant le trou taraudé recevant la vis et présentant à son extrémité une coupe biaise lui donnant la forme d'un coin et par laquelle il s'applique sur le bord arrière de la lame.

Ce poussoir demande une exécution trés minutieuse ce qui augmente le prix de revient.

Pour constituer les moyens de fixation de la lame en position requise, dans l'un de ces alésoirs (FR-A-2.209.630, 2.347.142 et DE-A-3.316.053), la rainure logeant la lame est au moins localement élargie de manière à loger en plus une bride jouxtant et surplombant la lame sur au moins une partie de sa longueur et, en arrière de la lame, cette bride est pourvue de trous taraudés débouchant face à des perçages de la tête dans lesquels sont engagées des vis sollicitant la bride dans le sens de son appui sur la lame.

L'usinage de la rainure élargie et de la bride doivent être trés minutieux, faute de quoi le pincement de la lame ne s'opère pas sur la totalité de leurs faces avant et arrière.

Dans le cas de l'alésoir décrit (DE-A-3.316.053), la bride forme une gorge transversale qui contourne avec jeu l'arrière de la lame de coupe et préserve un bec qui surplombe la lame de coupe et qui ne s'appuie dessus qu'au niveau de son bord externe.

Dans un autre alésoir décrit (FR-A-2.005.928), dans la tête et plus précisément dans le fond de la rainure logeant la lame, est exécutée, sur une longueur au moins égale à celle de la lame, une entaille longitudinale suffisamment profonde pour ne préserver, entre les deux parties de la tête séparée par l'entaille et la rainure qu'une bande de matière suffisamment fine pour être souple afin que les deux parties précitées puissent réaliser deux mors dans l'un desquels est percé un trou taraudé débouchant face à un perçage traversant l'autre mors et recevant une vis de serrage des mors l'un vers l'autre en pinçant entre eux la lame logée dans la rainure.

Avec ce montage, compte tenu des tolérances d'épaisseur des lames, en position de serrage, les mors ne s'appliquent pas toujours bien à plat sur les faces de la lame et le serrage est peu efficace.

Dans les deux cas de montage, que ce soit la rainure élargie ou que ce soit la profonde entaille, il y a sur toute la longueur de cet élargissement ou de cette entaille un trés grand affaiblissement de la tête qui est de ce fait peu apte à résister aux contraintes que lui infligent les efforts de coupe.

Dans le cas d'un outil de perçage (FR-A-2.298.393) il est connu pour la fixation de la lame de faire appel à une bride du type précité et posant donc les mêmes problèmes.

Pour le calage en position de la lame, il est fait appel à des poussoirs à coupe biaise comme exposé pour l'un des alésoirs décrits mais ici d'axe placé sensiblement perpendiculaire au plan de la lame ce qui ne permet pas un réglage trés précis mais on a vu que, pour un outil de perçage, il n'est pas nécessaire.

Dans le cas d'un outil de tournage, la lame de coupe ou plaque n'est pas logée dans une rainure mais, par ses trois faces contigües à un même sommet opposées aux faces actives, appuyée sur trois faces contigües à un même angle et présentées par unlogement prévu dans la tête.

Pour sa fixation, il est connu (FR-A-2.302.806 et CH-A-488.513) de faire appel à au moins une bride et, pour assurer le maintien contre les trois faces d'appui, celles-ci et les faces correspondantes de la lame sont inclinées.

Malheureusement, le serrage tend de ce fait à modifier la position de l'arête tranchante et cela n'est donc pas applicable à un alésoir.

En ce qui concerne la bride, dans un mode de réalisation (FR-A-2.302.806) elle est du type précité et présente donc les mêmes inconvénients notamment d'affaiblissement de la tête.

Dans un autre mode de réalisation (CH-A-488.513), la bride est créée par une gorge taillée dans une fine tige guidée en translation dans la tête au long d'une coulisse d'axe non parallèle au plan de la face avant de la lame.

La tige coopère avec une vis de serrage dont l'axe forme avec la partie de l'axe de la coulisse passant par la bride un angle aigu;et, pour recevoir l'action de la vis, la tige présente à hauteur de l'extrémité de la vis une découpe réservant autour de la face latérale de la vis un certain jeu et présentant une face sensiblement perpendiculaire à l'axe de la vis à l'extrémité de laquelle vis la dite face offre un appui.

La bride coopère avec l'une des faces d'une gorge taillée dans la lame à partir de sa face arrière.

Si cette solution permet de limiter l'affaiblissement de la tête au diamètre de chaque tige, cet appui sur une face d'une gorge est trés aléatoire et crée un affaiblissement qui interdit l'usage de lames en céramique dont les contraintes d'extension sont pratiquenent nulles.

De plus la face de la bride appuyant sur la lame étant perpendiculaire à l'axe de la tige, lequel axe est incliné par rapport à la principale face d'appui de la lame, comme indiqué plus haut, le serrage sollicite la lame dans le plan de son appui et dérègle sa position.

Dans le cas d'un outil de fraisage (FR-A-2.589.765) la lame est maintenue par appui dans un logement conique présenté par sa face avant d'une bille poussée par une vis de pression ; elle ne peut donc être pourvue de moyens de réglage.

Un des résultats que l'invention vise à obtenir est un alésoir à lame longitudinale rapportée du type précité comprenant des moyens de réglage qui, sans exiger d'usinages complexes et onéreux, assurent une très grande régularité du réglage.

Un autre résultat que l'invention vise à obtenir est un tel alésoir dont les moyens de fixation n'affaiblissent pas la tête de l'outil et assurent un parfait maintien de la lame.

Ce résultat est obtenu pour un alésoir conforme au préambule de la revendication 1 par les caractéristiques énoncées dans la partie caractérisante de cette revendication.

L'invention sera bien comprise à l'aide de la description ci-aprés faite à titre d'exemple non limitatif en regard du dessin ci-annexé qui représente schématiquement :

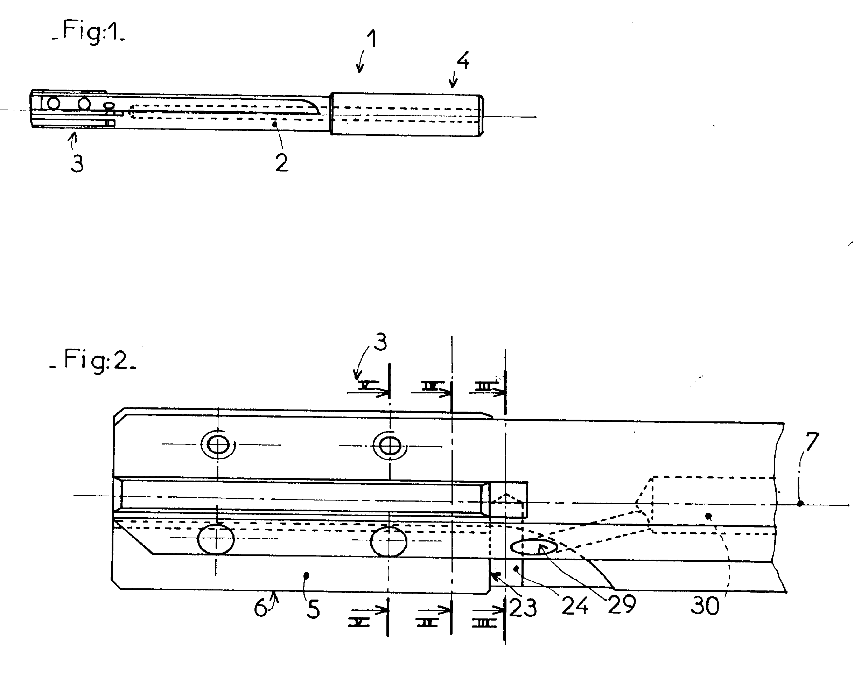

– figure 1 : l'alésoir vu de profil,
– figure 2 : à plus grande échelle, la tête de cet alésoir,

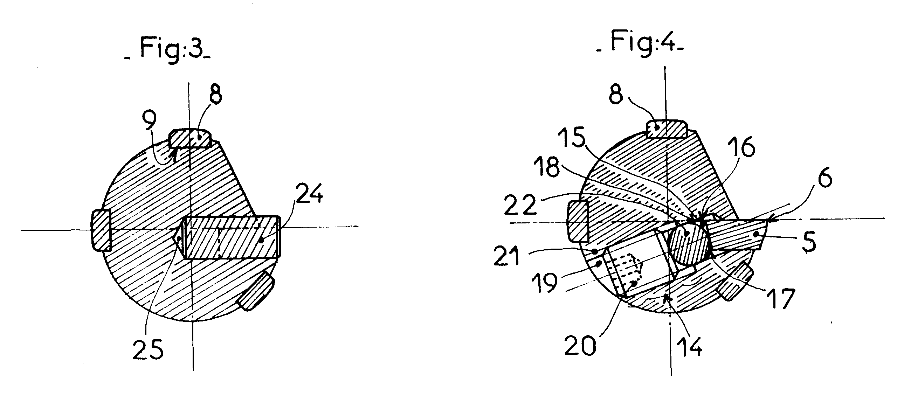

– figure 3 : une coupe selon III-III de la figure 2,
– figure 4 : une coupe selon IV-IV de la figure 2,

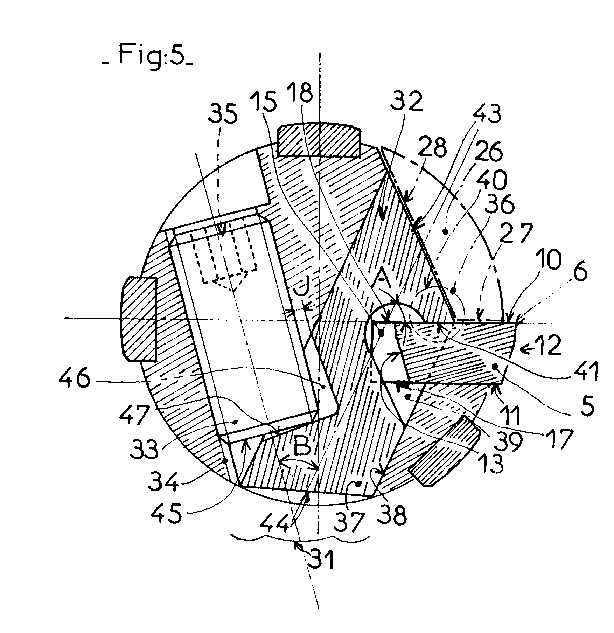

– figure 5 : à plus grande échelle une coupe selon V-V de la figure 2.

En se reportant au dessin, on voit que l'alésoir 1 comprend:

– une tige 2 dont une extrémité 3 réalise la tête de coupe tandis que l'autre extrémité 4 constitue la partie par laquelle l'alésoir est monté dans le porte outil de l'aléseuse et,
– une lame longitudinale 5 dont l'arête coupante 6 est sensiblement parallèle à l'axe longitudinal 7 de la tige 2.

Généralement, la tête de coupe porte en outre plusieurs guides 8 de forme rectiligne ou hélicoïdale, communément dénommés listons, par lesquels l'alésoir appuie sur la paroi du trou à aléser pour y reporter les efforts de coupe et pour en faire disparaître par lissage les irrégularités dues à la coupe.

Ces guides 8 ont une faible épaisseur dont une partie est logée dans une gorge 9 de section complémentaire creusée dans la tête.

Vue en coupe transversale, la lame 5 présente deux faces principales parallèles entre elles 10, 11 dites respectivement face avant et face arrière et deux champs 12, 13, l'un (12) externe à la tête et formant la face de dépouille, l'autre (13) interne à la tête et sur lequel prennent appui des moyens 14 de réglage de la position de l'arête coupante 6 par rapport à l'axe 7 de la tête 3.

Pour recevoir cette lame, la tête présente une rainure longitudinale 15 entre les flancs avant 16 et arrière 17 de laquelle se positionnent les faces avant et arrière de la lame.

Dans le fond 18 de la rainure 15 débouchent les passages 19 des moyens de réglage 14 comprenant notamment, d'une part, une vis 20 engagée dans un trou taraudé 21 de la tête et, d'autre part, un poussoir 22 intercalé entre la vis 20 et le champs arrière 13 de la lame 5 et logé dans l'alésage prolongeant le trou taraudé 21 et réalisant le passage 19 précité.

Afin de positionner longitudinalement et d'arrêter en translation la lame lors des efforts de coupe, l'extrémité arrière 23 de la lame prend appui sur une butée 24 généralement rapportée dans un perçage 25 de la tête.

Une partie de la face avant 10 de la lame est dégagée pour former la face d'attaque de la lame.

A cet effet, l'alésoir présente une gorge 26, en vé asymétrique à environ 120°, permettant en outre le dégagement des copeaux et dont une face 27 est formée par cette face d'attaque de la lame, l'autre face 28 étant formée par un méplat qui, sur la tête, s'étend de la rainure 15 logeant la lame jusqu'à la périphérie de la tête.

Dans cette gorge 26 peut déboucher un orifice 29 de raccordement à un canal 30 prévu dans l'axe de la tige pour amener de l'huile de coupe et/ou extraire les copeaux.

Afin de maintenir la lame 5 en bonne position, l'alésoir comprend encore au moins un moyen de fixation 31 comprenant notamment un moyen de serrage 32 actionné par une vis 33 engagée dans un trou taraudé 34 et dont la tête de manoeuvre 35 demeure apparente.

Chaque moyen de serrage 32 consiste en une bride 36 appuyant sur la lame et qui est créé par une gorge transversale 39 prévue dans une fine tige 37 guidée en translation dans la tête par une coulisse 38 d'axe non parallèle au plan de la face avant de la lame.

La bride 36 appuie sur la lame avec la force qui lui est communiquée par la vis 33 avec laquelle la dite tige coopère.

La coulisse 38 est formée par un perçage d'axe orthogonal à l'axe de la tête, lequel perçage est partiellement sécant avec le fond de la rainure 15 logeant la lame.

La tige 37 a une section complémentaire à la coulisse.

La gorge contourne avec jeu l'arrière de la lame sur toute son épaisseur et préserve dans la tige une partie supérieure 40 surplombant la lame.

La bride 36 appuie sur la face avant de la lame, en retrait de la face d'attaque de la lame, par une face 41 parallèle à la face arrière 17 de la rainure 15 logeant la lame.

Compte tenu du guidage en translation que procure la coulisse, quelle que soit l'épaisseur de la lame, la face 41 d'appui de la bride reste toujours parallèle au flanc arrière de la rainure logeant la lame et n'induit donc pas de glissement de la lame dans sa rainure ce qui préserve le réglage préalablement réalisé.

Le fond de la gorge transversale 39 présente avantageusement un large arrondi pour éviter toute amorce de rupture.

Dans une forme préférée de réalisation, la face extrême 43 de la partie supérieure 40 présente une coupe biaise d'inclinaison telle que, lorsque la bride serre la lame, l'extrémité se situe au moins sensiblement dans le plan de la face 28 de la tête dégageant la face d'attaque 27 de la lame.

L'autre extrémité 44 présente également avantageusement une coupe selon un plan choisi de manière que, lorsque la bride serre la lame, cette extrémité ne forme aucune saillie à la surface de la tête.

Avantageusement, l'axe de la coulisse passe à l'arrière de la lame et la partie de son axe située au dessus de la face avant de la lame forme avec cette face avant de la lame, un angle A de l'ordre de 60°.

Le trou taraudé recevant la vis de serrage 33 a son axe qui forme avec la partie de l'axe de la coulisse passant par la bride un angle aigu B et, pour recevoir l'action de la vis 33, la tige présente à hauteur de l'extrémité 45 de la vis une découpe 46 réservant autour de la face latérale de la vis un certain jeu J et présentant une face 47 sensiblement perpendiculaire à l'axe de la vis, à l'extrémité 45 de laquelle vis, la dite face 47 offre un appui.

De préférence, l'axe de la vis forme avec l'axe de la coulisse un angle B de l'ordre de 45°.

Le jeu J garantit à la tige de pouvoir coulisser au moins dans les limites du serrage et des tolérances d'épaisseur des lames.

Pour une lame de vingt millimètres de long, suffisent à sa fixation deux tiges brides du type précité par exemple d'un diamètre de trois millimètres seulement ce qui, bien évidemment, tout en affaiblissant beaucoup moins la tête que les rainures et les larges brides connues à ce jour, assure un maintien trés stable de la lame.

Quant aux moyens 14 de réglage de la position de la lame par rapport au fond 18 de la rainure longitudinale, selon une autre caractéristique de l'invention, le poussoir 22, intercalé entre la vis 20 et le champs arrière 13 de la lame, consiste en une bille de diamètre correspondant sensiblement à celui de l'alésage 19 prolongeant le trou taraudé 21 et débouchant dans le fond 18 de la rainure longitudinale 15.

Grâce à l'emploi d'une telle bille, il n'y a pas d'usinage à prévoir sur le poussoir pour son appui sur le champs arrière 13 et son appui sur la vis s'opère toujours au centre de la vis, sur le même point ce qui garantit la régularité du réglage.

**Revendications**

1. Alésoir à lame longitudinale rapportée comprenant:
    – une tige (2) dont une extrémité (3) réalise la tête de coupe tandis que l'autre extrémité (4) constitue la partie par laquelle l'alésoir est monté dans un porte outil et,
    – une lame longitudinale (5) dont l'arête coupante (6) est sensiblement parallèle à l'axe longitudinal (7) de la tige (2), et qui, vue en coupe transversale, présente deux faces principales parallèles entre elles (10, 11) dites respectivement face avant et face arrière et deux champs (12, 13), l'un (12) externe à la tête et formant la face de dépouille, l'autre (13) interne à la tête et prenant appui sur des moyens (14) de réglage de la position de l'arête coupante (6) par rapport à l'axe (7) de la tête (3), une partie de la face avant (10) de la dite lame étant dégagée pour former la face d'attaque de la lame,

la dite tête présentant pour recevoir cette lame, une rainure longitudinale (15) entre les flancs avant (16) et arrière (17) de laquelle se positionnent les faces avant et arrière de la lame et dans le fond (18) de laquelle débouchent les passages (19) des moyens de réglage (14),

lesquels moyens de réglage comprennent notamment, d'une part, une vis (20) engagée dans un trou taraudé (21) de la tête et, d'autre part, un poussoir (22) intercalé entre la vis (20) et le champs arrière (13) de la lame (5) et logé dans un alésage prolongeant le trou taraudé et réalisant le passage (19) précité,

lequel alésoir :

– présente par exemple une gorge en vé asymétrique à environ 120° permettant en outre le dégagement (26) des copeaux et dont une face est formée par cette face d'attaque (27) de la lame, l'autre face (28) étant formée par un méplat qui sur la tête s'étend de la rainure (15) logeant la lame jusqu'à la périphérie de la tête, et

– comprend, afin de maintenir la lame (5) en bonne position, des moyens de fixation (31) comprenant notamment au moins un moyen de serrage (32) actionné par une vis (33) engagée dans un trou taraudé (34) et dont la tête de manoeuvre (35) demeure apparente, lequel moyen de serrage (32) consiste en une bride (36) qui est créée par une gorge transversale taillée dans une fine tige (37) guidée en translation dans la tête par une coulisse (38) d'axe non parallèle au plan de la face avant de la lame,

laquelle bride (36) appuie sur la lame avec la force qui est communiquée à la tige par la vis (33) qui forme avec la partie de l'axe de la coulisse passant par la bride un angle aigu et qui, pour coopérer avec la tige, appuie sur une face (47) d'une découpe que la tige présente à hauteur de l'extrémité de la vis,

laquelle coulisse (38) est formée par un perçage d'axe orthogonal à l'axe de la tête, lequel perçage est partiellement sécant avec le fond de la rainure (15) logeant la lame et,

laquelle tige (37) a une section complémentaire à la coulisse et la gorge transversale de la tige contourne avec jeu l'arrière de la lame sur toute son épaisseur en préservant dans la tige une partie supérieure

(40) surplombant la lame,

cet alésoir étant **CARACTERISE** en ce que :

– la bride appuie sur la face avant de la lame, en retrait de la face d'attaque, par une face (41) parallèle à la face arrière (17) de la rainure logeant la lame,

– la face extrême (43) de la partie supérieure (40) de la tige présente une coupe biaise d'inclinaison telle que, lorsque la bride serre la lame, l'extrémité se situe au moins sensiblement dans le plan de la face (28) de la tête dégageant la face d'attaque (27) de la lame et

– l'extrémité (44) de la tige opposée à celle portant la bride présente une coupe selon un plan choisi de manière que, lorsque la bride serre la lame, cette extrémité ne forme aucune saillie à la surface de la tête.

2. Alésoir selon la revendication 1 **caractérisé** en ce que l'axe de la coulisse passe à l'arrière de la lame et en ce que la partie de son axe située au dessus de la face avant de la lame forme avec cette face avant de la lame, un angle A de l'ordre de 60°.

3. Alésoir selon la revendication 1 ou 2 **caractérisé** en ce que l'axe de la vis forme avec l'axe de la coulisse un angle B de l'ordre de 45°.

4. Alésoir selon l'une quelconque des revendications 1 à 3 **caractérisé** en ce que le fond de la gorge transversale (39) présente avantageusement un large arrondi pour éviter toute amorce de rupture.

5. Alésoir selon selon l'une quelconque des revendications 1 à 4 **caractérisé** en ce que, parmi les moyens de réglage (14), le poussoir (22) intercalé entre la vis (20) et le champs arrière (13) de la lame consiste en une bille de diamètre correspondant à celui de l'alésage (19) prolongeant le trou taraudé (21) et débouchant dans le fond (18) de la rainure longitudinale (15).

**Patentansprüche**

1. Reibahle mit langgestrecktem Einsatz, welche folgendes aufweist:

– einen Schaft (2), dessen eines Ende (3), den Schneidkopf bildet, während das andere Ende (4) den Abschnitt darstellt, über welchen die Reibahle in einem Werkzeugträger montiert wird, und

– eine langgestreckte Einsatzklinge (5), deren Schneidkante (6) im wesentlichen parallel zur Längsachse (7) des Schaftes (2) verläuft, und die im Querschnitt zwei zueinander parallele Hauptflächen (10, 11) aufweist, die jeweils als Vorder- bzw. Rückseite bezeichnet werden, sowie zwei Felder (12, 13), wovon das eine (12) auf der Außenseite des Kopfes liegt und die Reibfläche bildet, während das andere (13) auf der Innenseite des Kopfes liegt und sich auf einer Einrichtung (14) zur Positionseinstellung der Schneidkante (6) gegenüber der Achse (7) des Kopfes (3) abstützt, wobei ein Abschnitt der Vorderseite (10) der Klinge (5) freiliegt und die Angriffsfläche der Klinge bildet,

– wobei der Kopf zur Aufnahme der Einsatzklinge eine Längsnut (15) aufweist, zwischen deren vorderer (16) und hinterer Flanke die Vorder- und Rückseite der Klinge zu liegen kommt, während auf ihrem Grund (18) die Durchführungen (19) der Einstelleinrichtung (14) münden,

– und wobei die Einstelleinrichtung insbesondere eine Schraube (20) aufweist, die in eine Gewindebohrung (21) des Kopfes eingeschraubt ist, sowie einen Stößel (22), der zwischen die Schraube (20) und das hintere Feld (13) der Klinge (5) in eine in Verlängerung der Gewindebohrung ausgebildete Ausbohrung eingesetzt ist, welche die Durchführung (19) bildet,

wobei die Reibahle:
– beispielsweise eine asymmetrisch V-förmige Auskehlung von etwa 120° aufweist, die darüber hinaus den Austritt (26) der Späne gestattet und deren eine Seite von der Angriffsfläche (27) der Klinge gebildet wird, während ihre andere Seite (28) von einer Anflachung gebildet wird, die sich auf dem Kopf von der Nut (15) zur Aufnahme der Klinge bis zum Umfang des Kopfes erstreckt, und

– zur Halterung der Klinge (5) in korrekter Position schließlich Befestigungsmittel (31) aufweist, welche insbesondere zumindest eine Spanneinrichtung (32) umfassen, die mittels einer in eine Gewindeöffnung (34) eingesetzten Schraube (33) betätigt wird und deren Wirkkopf (35) sichtbar bleibt, wobei die Spanneinrichtung (32) aus einem Bunding (36) besteht, der aus einer Querkehle gebildet wird, die in einen feinen Schaft (37) eingelassen ist, der von einer Gleitführung (38), derern Achse nicht zur Ebene der Vorderseite der Klinge parallel ist, verschieblich im Kopf geführt wird

wobei sich der Bundring (36) auf der Klinge mit der Kraft abstützt, die auf ihn am Schaft über die Schraube (33) übertragen wird, welche mit dem Achsenabschnitt der Gleitführung (38), der durch den Bundring verläuft, einen spitzen Winkel einschließt und zum Zusammenwirken mit dem Schaft sich auf einer Fläche (47) eines Ausschnittes abstützt, den der Schaft in Höhe des Endes der Schraube aufweist,

wobei die Gleitführung (38) aus einer Bohrung besteht, deren Achse senkrecht zur Kopfachse verläuft und welche sich teilweise mit dem Grund der Nut (15) schneidet, in welche die Klinge eingesetzt ist, und

wobei des Schaft (37) einen zur Gleitführung komplementären Querschnitt aufweist und die Querkehle des Schaftes mit Spiel den hinteren Teil der Klinge über deren gesamte Dicke so umschließt, daß im Schaft ein oberer Abschnitt (40) verbleibt, der über die Klinge übersteht,

**dadurch GEKENNZEICHNET,**
– daß sich der Bunding auf der Vorderseite der Klinge über eine Fläche (41) abstützt, die parallel zur Rückseite (17) der Klingenaufnahmenut verläuft, und dabei von der Angriffsfläche zurückspringt,

– daß die Endfläche (43) des oberen Abschnitts (40) des Schaftes einen Schrägschnitt aufweist, dessen Neigung so stark ist, daß bei Einspannen der Klinge in dem Bundring das Ende zumindest im wesentlichen in der Ebene der Fläche (28) des Kopfes zu liegen kommt, welche die Angriffsfläche (27) der Klinge freigibt, und

– daß das Ende (44) der Klinge, das dem Ende mit dem Bundring gegenüberliegt, einen Schnitt in einer Ebene aufweist, die so gewählt ist, daß beim Einspannen der Klinge in dem Rundring dieses Ende keiner Vorsprung gegenüber der Fläche des Kopfes bildet.

2. Reibahle nach Anspruch 1,
   **dadurch gekennzeichnet,** daß die Achse der Gleitführung zur Rückseite der Klinge hin verläuft, und daß der Abschnitt ihrer Achse, der oberhalb der Vorderseite der Klinge liegt, mit dieser Vorderseite der Klinge einen Winkel A in der Größenordnung von 60° bildet.

3. Reibahle nach Anspruch 1 oder 2,
   **dadurch gekennzeichnet,** daß die Achse der Schraube mit der Achse der Gleitführung einen Winkel B in der Größenordnung von 45° einschließt.

4. Reibahle nach einem der Ansprüche 1 bis 3,
   **dadurch gekennzeichnet,** daß der Grund der Querkehle (39) vorteilhafterweise zur Vermeidung jedweden Anreißens eine große Abrundung aufweist.

**5.** Reibahle nach einem der Ansprüche 1 bis 4, **dadurch gekennzeichnet,** daß bei der Einstelleinrichtung (14) der zwischen die Schraube (20) und das hintere Feld (13) der Klinge eingesetzte Stößel (22) aus einer Kugel besteht, deren Durchmesser dem Durchmesser der die Gewindebohrung (21) verlängernden Ausbohrung (19) entspricht, welche im Grund (18) der Längsnut (15) mündet.

**Claims**

**1.** Reamer with attached longitudinal blade, comprising:

– a rod (2) whereof one end (3) forms the cutting head while the other end (4) constitutes the part by means of which the reamer is mounted in a tool holder and,

– a longitudinal blade (5) whereof the cutting edge (6) is substantially parallel to the longitudinal axis (7) of the rood (2) and which, as seen in cross-section, has two main faces parallel to one another (10, 11), respectively referred to as the front face and the rear face, and two areas (12, 13), one (12) outside the head and forming the clearance face, the other (13) inside the head and bearing on means (14) for adjusting the position of the cutting edge (16) with respect to the axis (7) of the head (3), part of the front face (10) of the said blade being disengaged to form the leading face of the blade,

the said heas having, for receiving this blade, a longitudinal groove (15) between the front (16) and rear (17) flanks of which the front and rear faces of the blade are positioned and in the base (18) of which there open the passages (19) for the adjusting means (14),

these adjusting means comprise in particular, on the one hand, a screw (20) engaging in a threated hole (21) of the head and, on the other hand, a thrustor (22) placed between the screw (20) and the rear area (13) of the blade (5) and housed in a bore prolonging the threaded hole and forming the above-mentioned passage (19),

which reamer:

– has for example an asymmetric approximately 120°, V-shaped channel which moreover allows disengagement (26) of the chips and whereof one face is formed by this leading face (27) of the blade, the other face (28) being formed by a flat which extends on the head from the groove (15) housing the blade as far as the edge of the head, and

– comprises, in order to keep the blade (5) in the proper position, fixing means (31) comprising in particular at least one clamping means (32) actuated by a screw (33) engaging in a threaded hole (34), whereof the manoeuvring head (35) remains visible, this clamping means (32) comprising a flange (36) formed by a cut transverse channel in a fine rod (37) which is guided in translational movement in the head along a slide (38) whereof the axis is not parallel to the plane of the front face of the blade,

which flange (36) bears on the blade with the force communicated to the rod by the screw (33), which, with the part of the axis of the slide passing through the flange, forms an acute angle and which, to cooperate with the rod, bears on a face (47) of a cutout on the rod at the level of the end of the screw,

which slide (38) is formed by a perforation whereof the axis is at right angles to the axis of the head, this perforation partially intersecting the base of the groove (15) housing the blade, and

which rod (37) has a portion complementary to the slide, and the transverse channel of the rod surrounds, with play, the black of the blade over its whole width, keeping an upper part (40) in the rod overhanging the blade,

this reamer being characterized in that:

– the flange bears on the front face of the blade, set back from the leading face, by means of a face (41) parallel to the rear face (17) of the groove housing the blade,

– the end face (43) of the upper part (40) of the rod has a bevelled cut whereof the inclination is such that, when the flange clamps the blade, the end is at least substantially located in the plane of the face (28) of the head disengaging the leading face (27) of the blade and

– the end (44) of the rod opposite that bearing the flange has a section along a plane selected such that when the flange clamps the blade this end does not project at all at the surface of the head.

**2.** Reamer according to Claim 1, characterized in that the axis of the slide passes behind the blade, and in that the part of its axis located above the front face of the blade forms with this front face of the blade an angle A in the order of 60°.

**3.** Reamer according to Claim 1 or 2, characterized in that the axis of the screws forms with the axis of the slide an angle B in the order of 45°.

**4.** Reamer according to any one of Claims 1 to 3, characterized in that the base of the transverse channel (39) advantageously has a broad rounded portion to prevent any incipient fracture.

5. Reamer according to any one fo Claims 1 to 4, characterized in that, of the adjusting means (14), the thrustor (22) placed between the screw (20) and the rear area (13) of the blade comprises a ball of a diameter corresponding to that of the bore (19) prolonging the threaded hole (21) and opening into the base (18) of the longitudinal groove (15).

_Fig:1._

_Fig:2._

_Fig:3_

_Fig:4_

EP 0 350 389 B1

_Fig.5_